# EUROPÄISCHE PATENTSCHRIFT

(11) **EP 2 070 621 B1**
(45) Veröffentlichungstag und Bekanntmachung des Hinweises auf die Patenterteilung: **10.07.2013**
(21) Anmeldenummer: 08020231.0
(22) Anmeldetag: 20.11.2008
(51) Int. Cl.: B23D 45/04, B23D 59/00, B27B 5/29, B27G 5/02

(54) **Gehrungssäge mit Winkeleinstellung**
Mitre saw with angle setting
Scie à onglet dotée d'un réglage d'angle

(30) Priorität: 13.12.2007 DE 202007017538 U
(43) Veröffentlichungstag der Anmeldung: 17.06.2009
(73) Patentinhaber: Metabowerke GmbH, 72622 Nürtingen (DE)
(72) Erfinder: Engelmann, Markus, 49716 Meppen (DE)
(74) Vertreter: Lorenz, Markus

(56) Entgegenhaltungen:
- GB-A- 2 420 312
- US-A- 5 473 821
- US-A1- 2007 084 075

## Beschreibung

Die Erfindung betrifft eine Gehrungssäge mit den Merkmalen des Oberbegriffs von Anspruch 1.

Gehrungssägen sind meist Kapp- und Gehrungssägen, bei denen das Sägeaggregat mittels einer Halterung am rückwärtigen Rand des Drehtisches um eine Querachse schwenkbar oberhalb der Werkstückauflagefläche angeordnet ist. Das Sägeblatt des Sägeaggregates kann aus einer angehobenen Ruhestellung in eine abgesenkte Sägestellung und umgekehrt geschwenkt werden. Mit dieser Bewegung des Sägeblattes kann ein auf der Werkstückauflagefläche befindliches Werkstück abgeschnitten - gekappt - werden. Kapp- und Gehrungssägen sind auch mit einem in Längsrichtung über die Werkstückauflagefläche ziehbaren Sägeaggregat als sog. Radialarmsägen bekannt. Bekannt sind auch Kapp- und Gehrungssägen, die zusätzlich die Funktion einer Radialarmsäge, also eine Zugfunktion haben.

Im vorliegenden Zusammenhang kommt es weniger auf die Kappfunktion der Säge als auf deren Gehrungsfunktion an. Es geht nämlich um die Einstellung des gewünschten Gehrungswinkels am Drehtisch der Gehrungssäge.

Bei mechanischen Gehrungssägen befindet sich an der Basis eine teilkreisförmige Skala, auf der ein mit dem Drehtisch beweglicher Zeiger läuft. Der Drehtisch kann mechanisch durch Rastungen oder einen kraftschlüssigen Feststeller in den typischen Gehrungswinkeln, insbesondere dem Winkel von 45°, fixiert werden.

Die normale Stellung des Drehtisches ist die Mittelstellung, in der die Sägeschnittebene des Sägeaggregates im Winkel von 90° zum Werkstückanschlag liegt. Der Mittelstellung ist der Drehwinkel 0° des Drehtisches zugeordnet. Von der Mittelstellung aus läßt sich der Drehtisch regelmäßig nach links und nach rechts drehen, meist bis zu einem Wert etwas größer als 45°, häufig auch asymmetrisch, beispielsweise links maximal 50°, rechts maximal 60°.

Bekannt sind bereits seit langem Gehrungssägen mit einer elektromechanischen bzw. elektronischen Drehwinkelerfassung und -anzeige (DE-A-10 2005 031 025 u.a.). Eine solche erweiterte Gehrungssäge hat dann neben der Drehwinkelerfassung, die ein dem Drehwinkel des Drehtisches gegenüber der Basis entsprechendes, elektronisch verarbeitbares Drehwinkelsignal bereitstellt, eine elektronische, vorzugsweise digital arbeitende Auswerteeinheit, eine elektronische, vorzugsweise ebenfalls digital arbeitende Anzeigeeinheit, die von der Auswerteeinheit angesteuert wird und zumindest den Ist-Drehwinkel des Drehtisches anzeigt, und eine Betätigungseinheit zur Betätigung der Auswerteeinheit, beispielsweise zum Ein- und Ausschalten. Zumindest die Anzeigeeinheit, die ggf. die gesamte Drehwinkelerfassung ist, ist vorne an der dem Bediener zugewandten Seite des Drehtisches oder eines entsprechenden Auslegers des Drehtisches angeordnet. Bekannt sind aber auch Anordnungen, bei denen die Anzeigeeinheit oder die gesamte Elektronik am Sägeaggregat oder am Werkstückanschlag angeordnet ist.

Bei der bekannten Gehrungssäge entsprechend dem Oberbegriff von Anspruch 1, von der die Erfindung ausgeht (US 2007/0084075 A1), ist die Funktion der Drehwinkelerfassung erweitert worden, um einen raumseitig aufgenommenen Raumwinkel eingeben und dessen Winkelhalbierende errechnen und anzeigen zu können.

Dort, wo beispielsweise zwei Bauteile des Innenausbaus an einer bauseitigen Ecke aufeinandertreffen, werden die beiden Bauteile in der Regel endseitig auf den gleichen halben Winkel, den Gehrungswinkel, zugeschnitten. Ist der bauseitige Raumwinkel tatsächlich exakt 90°, so läßt sich der halbe Winkel mit 45° leicht errechnen. Meist liegen aber bauseitig ungerade Raumwinkel vor. Um einen Raumwinkel bauseitig schnell und präzise zu ermitteln, verwendet man eine sog. Winkelschmiege (EP-B-1 189 735). Mit der Winkelschmiege nimmt man den Raumwinkel auf.

Bei der bekannten Gehrungssäge, von der die Erfindung ausgeht, kann man den mittels der Winkelschmiege ermittelten Raumwinkel an einer Skala der Winkelschmiege ablesen. Den abgelesenen Wert kann man mittels der Betätigungseinheit in die elektronische Auswerteeinheit der Drehwinkelerfassung eingeben. Mit einer weiteren Betätigung der Betätigungseinheit kann man dann aus diesem eingegebenen Wert den Winkel der Winkelhalbierenden errechnen lassen. Dieser wird dann auf der Anzeigeeinheit als Sollwert angezeigt. Der Drehtisch kann nun auf diesen Sollwert eingestellt werden. Dazu kann beispielsweise die Anzeigeeinheit eine zweifache Darstellung von Winkelwerten, zum einen den konstant bleibenden Soll-Drehwinkel, zum anderen den sich verändernden Ist-Drehwinkel anzeigen. Stimmen beide Werte überein, so steht der Drehtisch in der für den aufgenommenen Raumwinkel zutreffenden Drehstellung, so daß der Gehrungsschnitt am zu montierenden Bauteil, z.B. einer Fußleiste, ausgeführt werden kann.

Beim Übertragen des Wertes des Raumwinkels von der Winkelschmiege in die Drehwinkelerfassung der Gehrungssäge passieren im Stand der Technik viele Fehler. Zum einen ist die Ablesegenauigkeit der Skala an der Winkelschmiege nicht besonders hoch. Zum anderen passieren einfach auch häufig Übertragungsfehler. Insbesondere passieren auch Seitenfehler, also rechts wird mit links verwechselt.

Der Erfindung liegt somit das Problem zugrunde, bei einer Gehrungssäge mit einer elektronischen, vorzugsweise digitalen Anzeige des Drehwinkels des Drehtisches die Ermittlung der Winkelhalbierenden eines aufgenommenen Raumwinkels zu optimieren.

Erfindungsgemäß wird das zuvor aufgezeigte Problem durch die Merkmale von Anspruch 1 gelöst.

Mit einer Winkelschmiege wird zunächst der gewünschte Raumwinkel aufgenommen. Dann wird die mit dem Raumwinkel fixierte Winkelschmiege auf den Drehtisch der Gehrungssäge gelegt und ein Schenkel der Winkelschmiege an der Referenzanlage angelegt, und zwar so, daß der andere Schenkel der Winkelschmiege dem Werkstückanschlag zuweist. Dann wird der Drehtisch so weit gedreht, bis der andere Schenkel der Winkelschmiege an dem Werkstückanschlag anliegt. In dieser Position wird der Ist-Winkel des Drehtisches in der Auswerteeinheit abgespeichert. Entweder wird dieser Ist-Drehwinkel des Drehtisches angezeigt oder der Wert des Raumwinkels der Winkelschmiege wird angezeigt. Durch weiteres Betätigen der Betätigungseinheit kann dann in einem weiteren Schritt aus dem abgespeicherten Wert des Raumwinkels der Wert des der Winkelhalbierenden entsprechenden Drehwinkels des Drehtisches errechnet und mittels der Anzeigeeinheit angezeigt werden.

Entfernt man jetzt die Winkelschmiege vom Drehtisch, so kann in der an sich bekannten Weise der Drehtisch aus der aktuellen Position in die durch die Anzeigeeinheit vorgegebene Winkelstellung gedreht werden. Wird in dieser Winkelstellung der Sägeschnitt ausgeführt, so liegt die Sägeschnittebene des Sägeaggegrates genau im Winkel der Winkelhalbierenden. Der gewünschte Gehrungsschnitt an dem Bauteil kann ausgeführt werden.

Nach bevorzugter Lehre wird nicht nur der Drehwinkel, sondern auch die Lage (links, rechts) des der Winkelhalbierenden entsprechenden Drehwinkels des Drehtisches relativ zur Ist-Lage des Drehtisches errechnet und angezeigt.

Wie bereits zuvor ausgeführt worden ist, sind die verschiedenen Berechnungs- und Anzeigeschritte durch Betätigen der Betätigungseinheit auszulösen. Die Drehwinkelerfassung hat zwei Modi, nämlich den Modus, in dem der normale Drehwinkel des Drehtisches angezeigt wird, und den Modus, in dem der aufgenommene Raumwinkel verarbeitet und ggf. angezeigt wird. Die Umschaltung der bzw. in den verschiedenen Modi wird mittels der Betätigungseinheit durchgeführt.

Liegt die Referenzanlage in der Sägeschnittebene des Drehtisches, so kann man die Winkelschmiege mit einem Raumwinkel größer als 90° erst anlegen, wenn der Drehtisch zunächst zu einer Seite, beispielsweise nach rechts geschwenkt worden ist. Da die bauseitig aufgenommenen Raumwinkel meist in einem Bereich um 90° liegen, kann es sich empfehlen, die Referenzanlage von vornherein in einem bestimmten Winkel zur Sägeschnittebene anzuordnen, so daß die Referenzanlage in Mittelstellung des Drehtisches um einen bestimmten Winkel, beispielsweise einen Winkel von 20° oder 30°, nach einer Seite hin, beispielsweise nach rechts versetzt liegt. Dann kann man für die meisten Positionen der Winkelschmiege die Winkelschmiege in der Mittelstellung des Drehtisches problemlos an der Referenzanlage anlegen und den Drehtisch dann in Richtung des Werkstücksanschlags schwenken.

Die Referenzanlage kann am Drehtisch dauerhaft angeordnet sein. Sie kann auch nur zum Zwecke der Aufnahme eines Raumwinkels von einer Winkelschmiege am Drehtisch angebracht werden. Beispielsweise kann es sich bei der Referenzanlage um eine Leiste oder um zwei einsteckbare Zapfen handeln. Eine Alternative besteht auch darin, im Drehtisch als Referenzanlage eine radial verlaufende Nut vorzusehen, in die eine entsprechende Leiste o.dgl. an der Winkelschmiege einsteckbar ist.

Im folgenden wird die Erfindung anhand einer lediglich ein Ausführungsbeispiel darstellenden Zeichnung näher erläutert. In der Zeichnung zeigt
- Fig. 1: in einer perspektivischen Ansicht eine Gehrungssäge der in Rede stehenden Art,
- Fig. 2: schematisch die Aufnahme eines Raumwinkels mittels einer Winkelschmiege,
- Fig. 3: in Draufsicht Basis und Drehtisch einer Gehrungssäge der in Rede stehenden Art mit dort angeordneter, mit dem Raumwinkel fixierter Winkelschmiege.

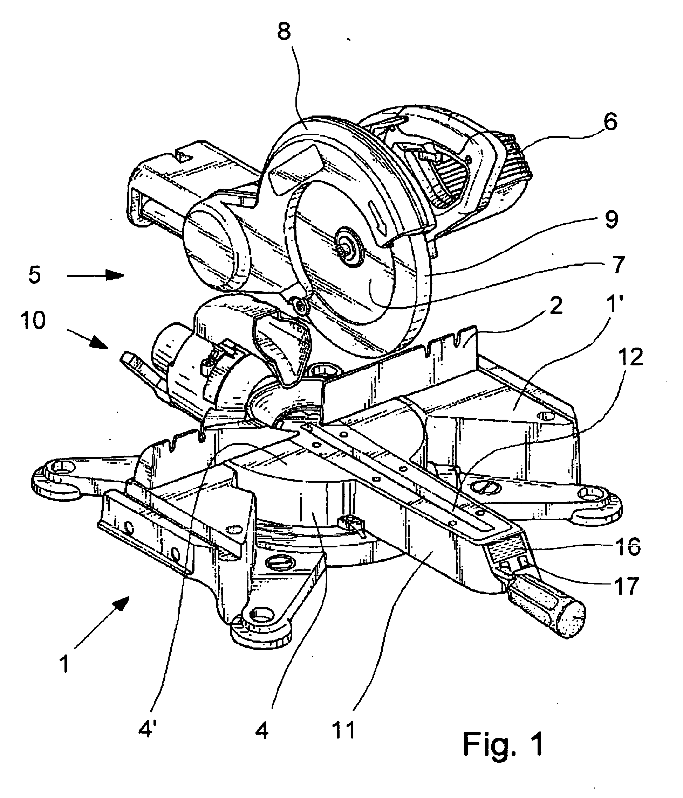

Die in Fig. 1 dargestellte Gehrungssäge ist eine Kapp- und Gehrungssäge mit einer Basis 1, die seitlich eine Werkstückauflagefläche 1' bildet, einem an der Basis 1 fest angeordneten Werkstückanschlag 2 - Anschlaglineal - , an dem zur Bearbeitung ein Werkstück zur Anlage gebracht werden kann, und einem an der Basis 1 angeordneten, um eine konstruktive oder virtuelle Hochachse gegenüber der Basis 1 drehbaren Drehtisch 4, der eine an den Werkstückanschlag 2 angrenzende Werkstückauflagefläche 4' bildet. Oberhalb der Werkstückauflagefläche 1', 4' ist am Drehtisch 4 ein Sägeaggregat 5 verstellbar angeordnet. Es handelt hier um ein Kappsägeaggregat mit einem elektrischen Antriebsmotor 6, einem vom Antriebsmotor 6 angetriebenen Sägeblatt 7, einer das Sägeblatt 7 von oben her überfassenden Schutzhaube 8 und einer Pendelschutzhaube 9. Das Sägeaggregat 5 ist insgesamt mittels einer Halterung 10 am rückwärtigen Rand des Drehtisches 4 angebracht.

Im Drehtisch 4, der nach vom durch einen Ausleger 11 verlängert ist, findet sich ein Eintauchschlitz 12 für das Sägeblatt 7 des Sägeaggregates 5. Dieser Eintauschschlitz 12 entspricht der Lage der Sägeschnittebene 12 des Sägeaggregates 5.

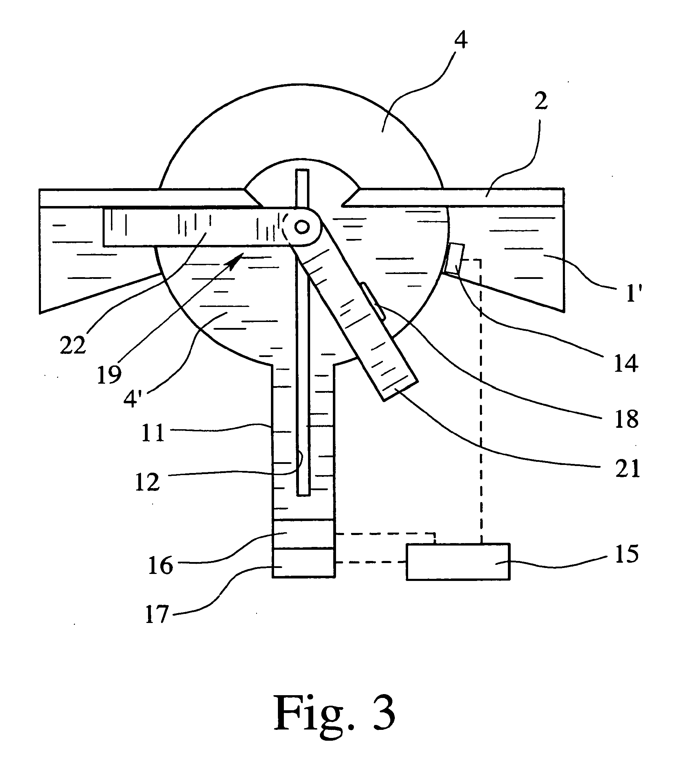

Fig. 1 und Fig. 3 zeigen die Mittelstellung, in der der Drehtisch 4 an der Basis 1 fixierbar ist und der die Sägeschnittebene 12 des Sägeaggregates 5 genau rechtwinklig zum Werkstückanschlag 2 ausgerichtet ist. Von dieser Mittelstellung aus läßt sich der Drehtisch 4, wie Fig. 1 und 3 gut erkennen lassen, sowohl nach links (+) als auch nach rechts (-) um einen gewissen Winkel drehen, regelmäßig einen Winkel von mindestens 45°, um den typischen Gehrungswinkel von 45° beidseits ohne weiteres schneiden zu können.

In Fig. 1 angedeutet, in Fig. 3 als Blockschaltbild hinzugefügt ist eine Drehwinkelerfassung 14, mit der der Drehwinkel des Drehtisches 4 gegenüber der Basis 1 erfaßbar ist. Der Drehwinkel wird in Form eines elektronisch verarbeitbaren Drehwinkelsignals bereitgestellt, und zwar für eine elektronische, vorzugsweise digitale Auswerteeinheit 15 zur Auswertung des Drehwinkelsignals und ggf. zur Berechnung und Bereitstellung anderer interessierender Werte. Von der Auswerteeinheit 15 wird angesteuert eine Anzeigeeinheit 16, die im dargestellten und bevorzugten Ausführungsbeispiel am vorderen Ende des Auslegers 11 des Drehtisches 4 für einen Bediener gut sichtbar und zugreifbar angeordnet ist. Im dargestellten Ausführungsbeispiel ist die Anzeigeeinheit 16 mit einer Betätigungseinheit 17 zur Betätigung der Auswerteeinheit 15 gekoppelt. Mittels der Anzeigeeinheit 16 ist zumindest der Ist-Drehwinkel des Drehtisches 4 anzeigbar.

Die Drehwinkelerfassung 14, die Auswerteeinheit 15, die Anzeigeeinheit 16 und die Betätigungseinheit 17 sind hier als funktionale Baugruppen dargestellt und beschrieben. Sie können konstruktiv in völlig anderer Weise zusammengesetzt sein, beispielsweise auch komplett Teil einer einzigen Einheit sein. Regelmäßig sind diese Einheiten von einem Mikroprozessor gesteuert.

Fig. 3 zeigt nun, daß am Drehtisch 4, und zwar hier und nach bevorzugter Lehre auf der Werkstückauflagefläche 4', an einer bestimmten Position eine radial zur Hochachse 3 verlaufende Referenzanlage 18 angeordnet ist. Diese ist entweder hier fest angebracht oder auswechselbar angeordnet, wird also dann nur bei Bedarf an dieser Stelle angebracht. Bei der Referenzanlage 18 handelt es sich im dargestellten Ausführungsbeispiel um eine Leiste, die radial zur Hochachse 3 verläuft. Es kann sich hier auch um einsteckbare, voneinander beanstandete Zapfen handeln.

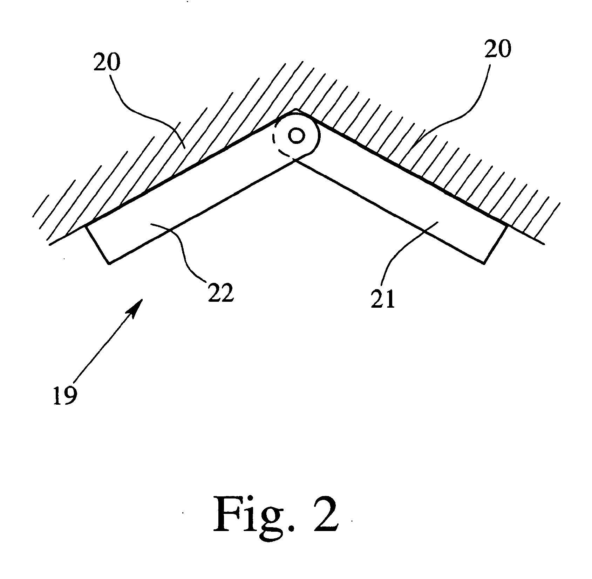

Fig. 2 zeigt, wie mit einer Winkelschmiege 19 bauseits ein Raumwinkel zwischen zwei aufeinanderstoßenden Wänden 20 aufgenommen wird. Für die Technik der Arbeiten mit einer Winkelschmiege wird auf die Beschreibungseinleitung verwiesen.

Anders als im den Ausgangspunkt für die Lehre bildenden Stand der Technik wird der mittels der Winkelschmiege 19 aufgenommene Raumwinkel nicht durch manuelle Eingabe mittels der Betätigungseinheit 17 in die Auswerteeinheit 15 eingegeben, sondern gewissermaßen "blind" auf den Drehtisch 4 übertragen. Dazu ist vorgesehen, daß der mit der Winkelschmiege 19 aufgenommene Raumwinkel durch Anlegen eines Schenkels 21 der mit dem Raumwinkel fixierten Winkelschmiege 19 an der Referenzanlage 18 und Drehen des Drehtisches 4 bis zur Anlage des anderen Schenkels 22 der Winkelschmiege 19 an dem Werkstückanschlag 2 auf den Drehtisch 4 übertragen wird. In dem Modus "Raumwinkel" ist dieser Drehwinkel des Drehtisches 4 in der Auswerteeinheit 15 durch Betätigen der Betätigungseinheit 17 abspeicherbar. Mittels der Auswerteeinheit 15 wird aus dem in diesem Modus abgespeicherten Wert des Raumwinkels der Wert der Winkelhalbierenden ermittelt. Diesen Wert setzt die Auswerteeinheit 15 in einen entsprechenden Soll-Drehwinkel des Drehtisches 4 um. Dieser Soll-Drehwinkel des Drehtisches 4 wird mittels der Anzeigeeinheit 16 angezeigt.

Nun wird die Winkelschmiege 19 entfernt und der Drehtisch 4 kann auf den Soll-Drehwinkel eingestellt werden. Wird nun der Sägeschnitt am interessierenden Bauteil ausgerührt, erfolgt dies mit dem korrekten Gehrungswinkel für den letztlich gewünschten Raumwinkel.

Mittels einer geteilten Anzeige der Anzeigeeinheit 16, die einerseits den Ist-Drehwinkel des Drehtisches 4, andererseits den Soll-Drehwinkels des Drehtisches 4 anzeigt, läßt sich die Einstellung des Drehtisches 4 schnell und problemlos vornehmen. Um einen Links/Rechts-Fehler zu vermeiden empfiehlt es sich, daß auch die Lage des der Winkelhalbierenden entsprechenden Drehwinkels des Drehtisches 4 relativ zur Ist-Lage des Drehtisches 4 errechnet und angezeigt wird, beispielsweise durch einen nach links oder rechts weisenden Pfeil. Dadurch läßt sich einer der häufigsten Übertragungsfehler bei Verwendung einer Winkelschmiege vermeiden.

Im Modus "Raumwinkel", in dem der Raumwinkel durch Anlegen der Winkelschmiege 19 an der Referenzanlage 18 und Einstellen des Drehtisches 4 auf den Drehtisch 4 übertragen wird, sollte zweckmäßigerweise der Wert des Raumwinkels auf der Anzeigeeinheit 16 angezeigt werden. Das gibt eine zusätzliche Sicherheit, weil der Fachmann natürlich im Kopf schnell den halben Winkel errechnen und dann beim späteren Modus "Einstellungen" die Anzeige der Lage der Winkelhalbierenden überprüfen kann.

Wie bereits zuvor erläutert worden ist, werden zweckmäßigerweise die verschiedenen Berechnungs- und Anzeigeschritte durch Betätigen der Betätigungseinheit 17 ausgelöst, beispielsweise mittels mehrerer Betätigungstasten.

Im allgemeinen Teil der Beschreibung ist bereits darauf hingewiesen worden, daß es für die in der Praxis üblichsten Raumwinkel zweckmäßig ist, wenn die Referenzanlage 18 nicht mit der Sägeschnittebene 12 übereinstimmt, sondern in einem bestimmten Winkel zur Sägeschnittebene 12 liegt. Hier empfehlen sich Winkel von 20° oder 30°. Das dargestellte Ausführungsbeispiel zeigt in Fig. 3 eine Variante mit 30°. Mit diesem Offsetwinkel verschiebt man den Bereich besonders einfach nutzbarer Raumwinkel zu praxisnahen Werten hin.

Bei dem in Fig. 2 und 3 dargestellten Ausführungsbeispiel gelten zunächst folgende konstruktive Gegebenheiten der Gehrungssäge:

Schwenkwinkel des Drehtisches 4 nach links 50°, Schwenkwinkel des Drehtisches 4 aus der Mittelstellung nach rechts -60°. Der gesamte Winkelbereich für die Schwenkung des Drehtisches 4 beträgt 110°.

Die Winkelstellung der Referenzanlage 18 auf der Werkstückauflagefläche 4' des Drehtisches 4 ist -30°.

Damit lassen sich seitens einer Winkelschmiege 19 beim Schwenken des Drehtisches 4 nach rechts ein maximaler Winkel von 180° (gestreckter Winkel) erzielen, beim Schwenken des Drehtisches 4 nach links ergibt sich ein minimaler Winkel von 70°.

Fig. 2 zeigt einen vorgefundenen Raumwinkel von 120°. Die Winkelschmiege 19 ist somit auf 120° eingestellt. Die Referenzanlage 18 liegt in Fig. 3 genau an der Winkelschmiege 19 an, der andere Schenkel 22 der Winkelschmiege 19 liegt an dem Werkstückanschlag 2. Es ergibt sich der Drehwinkel des Drehtisches 4 mit 0°. Der Wert der Winkelhalbierenden 60° bedeutet einen Drehwinkel des Drehtisches 4 von + 30° gegenüber der Mittelstellung. Das wird zunächst als Soll-Drehwinkel des Drehtisches 4 auf der Anzeigeeinheit 16 angezeigt, während der angezeigte Ist-Drehwinkel des Drehtisches 4 noch 0° zeigt. Ein Pfeil nach links auf der Anzeigeeinheit 16 zeigt an, in welcher Richtung der Drehtisch 4 auf 30° gedreht werden muß.

Die Übertragung des aufgenommenen Raumwinkels erfolgt gewissermaßen "blind", nämlich ohne daß Übertragungsfehler gemacht werden können.

Eine in der Zeichnung nicht dargestellte Alternative für die Referenzanlage 18 besteht darin, diese nur als in dem entsprechenden Winkel auf der Werkstückauflagefläche 4' verlaufende Nut auszuführen und dann eine Winkelschmiege 19 zu verwenden, die eine in die Nut passende Leiste oder entsprechend beabstandete, in die Nut passende Zapfen aufweist. Dann hat man eine völlig ebene Werkstückauflagefläche 4' für die normalen Bearbeitungen des Werkstückes zur Verfügung.

## Patentansprüche

1. Gehrungssäge mit
einer Basis (1),
einem an der Basis (1) fest angeordneten Werkstückanschlag (2),
einem an der Basis (1) angeordneten, um eine körperliche oder virtuelle Hochachse gegenüber der Basis drehbaren Drehtisch (4), der eine an den Werkstückanschlag (2) angrenzende Werkstückauflagefläche (4') bildet, und
einem am Drehtisch (4) oberhalb der Werkstückauflagefläche (4) verstellbar angeordneten Sägeaggregat (5),
wobei der Drehtisch (4) an der Basis (1) in einer Mittelstellung fixierbar ist, in der die Sägeschnittebene (12) des Sägeaggregates (5) im Winkel von 90° zum Werkstückanschlag (2) liegt, und bezogen auf die Mittelstellung mitsamt dem Sägeaggregat (5) mindestens nach einer Seite, vorzugsweise nach links (+) und rechts (-) drehbar ist,
ferner mit einer Drehwinkelerfassung. (14), mit der der Drehwinkel des Drehtisches (4) gegenüber der Basis (1) erfaßbar und in Form eines elektronisch verarbeitbaren Drehwinkelsignals bereitstellbar ist, einer elektronischen, vorzugsweise digitalen Auswerteeinheit (15) zur Auswertung des Drehwinkelsignals und ggf. zur Berechnung und Bereitstellung anderer interessierender Werte, einer elektrischen, vorzugsweise digitalen, von der Auswerteeinheit (15) angesteuerten Anzeigeeinheit (16) zur Anzeige zumindest des Ist-Drehwinkels des Drehtisches (4), und einer Betätigungseinheit (17) zur Betätigung der Auswerteeinheit (15),
**dadurch gekennzeichnet,**
**daß** am Drehtisch (4), vorzugsweise auf der Werkstückauflagefläche (4') an einer bestimmten Position, eine radial zur Hochachse verlaufende Referenzanlage (18) angeordnet ist,
**daß** ein mit einer Winkelschmiege (19) aufgenommener Raumwinkel durch Anlegen eines Schenkels (21) der mit dem Raumwinkel fixierten Winkelschmiege (19) an der Referenzanlage (18) und Drehen des Drehtisches (4) bis zur Anlage des anderen Schenkels (22) der Winkelschmiege (19) an dem Werkstückanschlag (2) auf den Drehtisch (4) übertragbar und in der Auswerteeinheit (15) abspeicherbar ist und
**daß** mittels der Auswerteeinheit (15) aus dem abgespeicherten Wert des Raumwinkels der Wert des der Winkelhalbierenden entsprechenden Drehwinkels des Drehtisches (4) errechenbar und mittels der Anzeigeeinheit (16) anzeigbar ist.

2. Gehrungssäge nach Anspruch 1, **dadurch gekennzeichnet,**
**daß** auch die Lage (links, rechts) des der Winkelhalbierenden entsprechenden Drehwinkels des Drehtisches (4) relativ zur Ist-Lage des Drehtisches (4) errechenbar und anzeigbar ist.

3. Gehrungssäge nach Anspruch 1 oder 2, **dadurch gekennzeichnet,**
**daß** auch der Wert des Raumwinkels anzeigbar ist.

4. Gehrungssäge nach einem der Ansprüche 1 bis 3, **dadurch gekennzeichnet,**
**daß** die verschiedenen Berechnungs- und Anzeigeschritte durch Betätigen der Betätigungseinheit (17) auslösbar sind.

5. Gehrungssäge nach einem der Ansprüche 1 bis 4, **dadurch gekennzeichnet,**
**daß** die Referenzanlage (18) in der Sägeschnittebene (12) liegt.

6. Gehrungssäge nach einem der Ansprüche 1 bis 4, **dadurch gekennzeichnet,**
**daß** die Referenzanlage (18) in einem bestimmten Winkel, vorzugsweise in einem Winkel von 20° oder 30°, zur Sägeschnittebene (12) liegt.

7. Gehrungssäge nach einem der Ansprüche 1 bis 6, **dadurch gekennzeichnet,**
**daß** die Referenzanlage (18) eine radial verlaufende Nut in der Werkstückauflagefläche des Drehtisches (4) ist und die Winkelschmiege (19) eine zu der Nut passende, in die Nut einsteckbare Leiste oder beabstandete Zapfen aufweist.

## Claims

1. Mitre saw having:
a base (1);
a workpiece stop (2) arranged in a fixed manner on said base (1);
a rotary table (4) which can be rotated about a physical or virtual arbor in relation to the base (1) and which forms a workpiece support surface (4') adjoining the workpiece stop (2); and
a saw unit (5) which is arranged in an adjustable manner on the rotary table (4) above the workpiece support surface (4');
wherein the rotary table (4) can be fixed on the base (1) in a central position in which the cutting plane (12) of the saw of the saw unit (5) lies at an angle of 90° in relation to the workpiece stop (2) and can be rotated, together with the saw unit (5), at least towards one side, and preferably towards the left (+) and the right (-), referred to the central position;
said mitre saw also having a rotational angle acquisition device (14) by means of which the rotational angle of the rotary table (4) in relation to the base (1) can be acquired and supplied, in the form of a rotational angle signal that can be electronically processed, to an electronic, and
preferably digital, evaluating unit (15) for evaluation of the rotational angle signal and, optionally, for the calculation and supplying of other values which are of interest to an electrical, and preferably digital, display unit (16), which is activated by the evaluating unit (15), for displaying at least the actual rotational angle of the rotary table (4), and to an actuating unit (17) for actuating the evaluating unit (15);
**characterised in that**
a reference unit (18), which extends radially in relation to the vertical arbor, is arranged on the rotary table (4), and preferably on the workpiece support surface (4'), at a certain position;
that a solid angle which is picked up by means of an angle bevel (19) can be transmitted to the rotary table (4) and stored in the evaluating unit (15) as a result of the bearing of one leg (21) of the angle bevel (19), which bevel is fixed by means of the solid angle, against the reference unit (18), and of the rotation of the rotary table (4) until it bears against the other leg (22) of the angle bevel (19); and
that the value of the rotational angle of the rotary table (4) that corresponds to the angle bisector can be computed, by means of the evaluating unit (15), from the stored value of the solid angle, and can be displayed by means of the display unit (16).

2. Mitre saw according to claim 1, **characterised in that** it is also possible to calculate and display the location (left, right) of the rotational angle of the rotary table (4) that corresponds to the angle bisector, relative to the actual location of the rotary table (4).

3. Mitre saw according to claim 1 or 2, **characterised in that** it is also possible to display the value of the solid angle.

4. Mitre saw according to one of claims 1 to 3, **characterised in that** it is possible to trigger the various calculation and display steps by actuating the actuating unit (17).

5. Mitre saw according to one of claims 1 to 4, **characterised in that** the reference unit (18) lies within the cutting plane (12) of the saw.

6. Mitre saw according to one of claims 1 to 4, **characterised in that** the reference unit (18) lies at a certain angle, and preferably at an angle of 20° or 30°, in relation to the cutting plane (12) of the saw.

7. Mitre saw according to one of claims 1 to 6 **characterised in that** the reference unit (18) is a radially extending groove in the workpiece support surface of the rotary table (4), and the angle bevel (19) has a strip, which fits the groove and can be inserted in said groove, or spaced-apart pins.

## Revendications

1. Scie à onglet avec
une base (1),
une butée d'appui (2) pour une pièce à travailler fixée rigidement à la base (1),
une table rotative (4) par rapport à et montée sur la base (1), agencée pour tourner autour d'un axe vertical réel ou virtuel, et formant une surface d'appui (4') de la pièce à travailler, cette surface étant en contact avec la butée d'appui (2), et
un ensemble de sciage (5) réglable en position lié à la table rotative (4) au-dessus de la surface d'appui (4') de la pièce à travailler,
dans laquelle la table rotative (4) est agencée pour être fixée à la base (1) dans une position centrale, dans laquelle le plan de coupe de scie (12) de l'ensemble de sciage (5) se situe angulairement à 90° par rapport à la butée d'appui (2) de la pièce à travailler, et pour tourner par relativement à la position centrale, avec la totalité de l'ensemble de sciage (5), de préférence vers la gauche (+) et la droite (-),
en outre, avec un capteur (14) d'angle de rotation, par laquelle valeur de l'angle de rotation de la table rotative (4) par rapport à la base (1) peut être captée et rendue disponible sous la forme d'un signal électronique utilisable pour un traitement, avec une unité de traitement électronique (15), de préférence digitale, pour le traitement du signal d'angle de rotation et, le cas échéant pour le calcul et la mise à disposition d'autres valeurs utiles, avec une unité d'affichage (16), de préférence digitale, pilotée par l'unité de traitement électronique (15) pour l'affichage d'au moins la valeur angulaire réelle de la table rotative (4), et avec une unité d'actionnement (17) pour l'activation de l'unité de traitement électronique (15),
**caractérisée en ce que**,
la table rotative (4) est pourvue d'un appui de référence (18) monté sur la surface d'appui (4') de la pièce à travailler, dans une position déterminée, et s'étendant radialement par rapport à l'axe vertical,
**en ce qu'**un angle spatial, défini au moyen d'une équerre (19) en appuyant un bras (21) en butée contre l'appui de référence (18) en correspondance avec l'angle spatial de l'équerre (19), et en tournant la table rotative (4) jusqu'à ce que l'autre bras (22) de l'équerre soit amené en contact contre la butée d'appui (2) sur la table rotative (4), est transmissible et mémorisable dans l'unité de traitement électronique (15), et
**en ce que** au moyen de l'unité de traitement électronique (15), la demi-valeur de l'angle de rotation de la table rotative (4) peut être calculée en fonction de la valeur mémorisée de l'angle mesuré et affiché par l'unité d'affichage (16).

2. Scie à onglet selon la revendication 1, **caractérisée en ce que**,
de même, la position (gauche, droite) du demi-angle de rotation correspondant à l'angle de rotation de la table (4), relatif à l'angle mesuré de la table rotative (4), est également accessible et affichable.

3. Scie à onglet selon la revendication 1 ou 2, **caractérisée en ce que**, l'angle spatial peut également être affiché.

4. Scie à onglet selon l'une des revendications 1 à 3, **caractérisée en ce que**, les différentes étapes de calcul et d'affichage peuvent être exécutées par l'unité d'actionnement (17).

5. Scie à onglet selon l'une des revendications 1 à 4, **caractérisée en ce que** l'appui de référence (18) est disposé dans le plan de coupe (12) de la scie.

6. Scie à onglet selon l'une des revendications 1 à 4, **caractérisée en ce que**, l'appui de référence (18) est disposé dans un angle déterminé, de préférence dans un angle compris entre 20° et 30° par rapport au plan de coupe (12).

7. Scie à onglet selon l'une des revendications 1 à 6, **caractérisée en ce que**, l'appui de référence (18) est constitué par une rainure radiale ménagée dans la surface d'appui de la table rotative (4) et l'équerre (19) comporte une gorge ou des goujons espacés correspondant à cette rainure.
